(19) Europäisches Patentamt
European Patent Office
Office européen des brevets

(11) **EP 1 975 607 A2**

(12) **EUROPÄISCHE PATENTANMELDUNG**

(43) Veröffentlichungstag:
    **01.10.2008 Patentblatt 2008/40**

(21) Anmeldenummer: **08004441.5**

(22) Anmeldetag: **11.03.2008**

(51) Int Cl.:
    **G01N 29/04** (2006.01)          **G01N 29/34** (2006.01)
    **G01N 29/24** (2006.01)

(84) Benannte Vertragsstaaten:
    **AT BE BG CH CY CZ DE DK EE ES FI FR GB GR HR HU IE IS IT LI LT LU LV MC MT NL NO PL PT RO SE SI SK TR**
    Benannte Erstreckungsstaaten:
    **AL BA MK RS**

(30) Priorität: **28.03.2007 DE 102007015366**
                **30.06.2007 DE 102007030566**

(71) Anmelder: **manroland AG**
    **63075 Offenbach (DE)**

(72) Erfinder: **Casagrande, Magdalena-Elena, Dipl.-Phys.**
    **81667 München (DE)**

(74) Vertreter: **Stahl, Dietmar**
    **manroland AG**
    **Intellectual Property (IPB)**
    **Postfach 10 12 64**
    **63012 Offenbach am Main (DE)**

(54) **Zerstörungsfreie Prüfverfahren der Aushärtungs- oder Trocknungsgrades von Farben und Lacken mittels Oberflächenwellen**

(57) In einem Verfahren und einer Vorrichtung zur Bestimmung des Härtungs- oder Trocknungsgrades von einer oder mehreren auf einem Substrat, wie zum Beispiel Papier, Karton, Kunststofffolie oder Verbundmaterialien, gedruckter Druckfarben- oder Lackschichten soll eine schnellere und effizientere Messmethode gefunden werden, die darüber hinaus sichere und einfach zu interpretierende Ergebnisse liefert. Die Methode soll bei Druckverfahren in den Massendruckverfahren Tief-, Flexo-, Sieb- oder Offsetdruck zur Anwendung kommen.

Der Härtungs- bzw. Trocknungsgrad wird dabei indirekt über die Veränderung der mechanischen oder viskoelastischen Eigenschaften der Druckfarben- und/oder Lackschichten auf dem Substrat bestimmt, die sich durch den Härtungs- bzw. Trocknungsvorgang ergeben. Als Messverfahren wird die Erfassung von Schallwellen mittels eines piezoelektrischen Sensors angewendet.

Fig. 6

EP 1 975 607 A2

**Beschreibung**

Die Erfindung betrifft ein Verfahren zur Prüfung des Härtungsgrades von in einem der Massendruckverfahren Offset-, Flexo- oder Tiefdruck gedruckten Druckfarben- oder Lackschichten mittels Ultraschall.

Die Härtung von Druckfarben- und Lackschichten kann einmal durch Evaporation von Lösemitteln, durch das Wegschlagen von Lösemitteln in den Bedruckstoff, durch Oxidation, durch Polymerisation in UV- oder Elektronenstrahltrockner oder durch Kombination der aufgeführten Trocknungsmechanismen geschehen.

Für eine Kontrolle der Durchhärtung von Druck- und Lackschichten sprechen viele Faktoren. Eine ausreichende Trocknung und Härtung der verdruckten Farben / Lacke ist Voraussetzung für qualitativ hochwertige Drucke. Innerhalb des Förderwegs der Bogen durch die Maschine können Berührungen der frisch bedruckten oder lackierten Bogenoberfläche zu Beschädigungen hervorrufen, was Makulatur bedingt. Die in der Auslage einer Bogendruckmaschine oder aufgerollte Rollenbahnen einer Rollendruckmaschine müssen hinsichtlich der aufgedruckten Druckfarben / Lacke ausreichend getrocknet sein, das sie sonst beim Abstapeln bzw. aufrollen verschmieren und verblocken würden. Gerade letzteres würde eine Weiterverarbeitung der Druckprodukte erschweren bzw. gänzlich unmöglich machen.

An die Einstellung unterschiedlich aufgebauter Trocknereinrichtungen sind im Druckprozess hohe Anforderungen zu stellen. Bereits beim Einrichten der Druckmaschine hat der Bediener Einstellungen an den Trocknereinrichtungen vorzunehmen, um nach möglichst geringer Zeit und Anzahl von Makulaturbogen (Vorlaufmakulatur) die erforderliche Qualität produzieren zu können. Eine zu hoch gewählte Einstellung der Trocknerleistung bedingt nicht nur einen hohen Energieverbrauch der Druckmaschine und ebenfalls eine hohe Abwärmeleistung, welche die Temperatur des Drucksaales erhöht bzw. durch die Klimatisiereinrichtung des Drucksaales auf den vorgesehenen Wert zu regeln wäre, sondern auch der Druckprozess an sich wird negativ beeinflusst. Bekanntlich ändert sich die Zügigkeit und Viskosität von Farbe / Lacke, sodass eine hohe Maschinenerwärmung nebst der Erwärmung von Farbe und Dosiereinrichtung unter Umständen wieder Makulatur verursachende Nachregelungen erforderlich machen. Zu gering gewählte Einstellgrößen für die Trocknerwirkung bzw. Trocknerleistung sind ebenfalls zu vermeiden, da sonst die geschilderte Gefahr des Verschmierens frisch bedruckter Bogen während des Bogentransportes bzw. in der Auslage besteht.

Durch eine Trocknersteuerung ist neben einer Makulaturreduzierung auch eine erhebliche Energieeinsparung möglich. Da die Trocknereinrichtungen nur noch mit der Leistung gefahren werden, welche entsprechend den aktuellen Gegebenheiten erforderlich sind, wird die Stromaufnahme der Einrichtungen auf den jeweilig erforderlichen Wert reduziert. Da die Trocknereinrichtungen auch Abwärme produzieren, ergibt sich auch eine verringerte Aufheizung von Maschinenelementen bzw. der gesamten Maschine. Dadurch wird auch die Lebensdauer der Maschine bzw. von Maschinenkomponenten erhöht. Letztlich vermeidet eine reduzierte Leistung der Trockner auch eine Erhöhung der Drucksaaltemperatur. Bei einem klimatisierten Drucksaal gibt dies ebenfalls eine Energieeinsparung, da weniger Abwärme seitens der Trockner produziert wird.

Besondere Fragestellungen ergeben sich für den Druck strahlenhärtender Druckfarben und Lacke in die Druckmaschinen, die eine Härtungskontrolle erforderlich machen. Der Druck mit strahlenhärtenden Offsetdruckfarben hat in der heutigen Druckindustrie eine weite Verbreitung gefunden und ist weitläufig bekannt. Vorteile des Drucks mit den strahlenhärtenden Druckfarben liegen in der schnellen, spontanen Vernetzung nach der Bestrahlung mit einer UV-Strahlungsquelle, der Lösungsmittelfreiheit der Druckfarben und der guten Bedruckbarkeit von nicht saugenden Substraten.

Konventionelle Druckfarben sind dagegen entweder ölbasierend oder lösemittelhaltig. Ölbasierende Druckfarben trocknen durch die Oxidation der Bindemittel auf Ölbasis oder trocknen durch Verdampfen der in der Druckfarbe befindlichen leichtflüchtigen Öle (Heat-Set-Verfahren). Strahlenhärtende Druckfarben und Lacke härten dagegen durch einen fotochemischen Prozess, der auch als Vernetzung bezeichnet wird. Der flüssige oder unvernetzte Druckfarbenfilm wird durch die Polymerisation unter Einwirkung von UV-Licht in einen festen Zustand übergeführt.

Es sind aber Fehlerfälle bekannt geworden, bei denen unvernetzte Druckfarbenbestandteile durch Abklatsch im Auslegerstapel einer Bogendruckmaschine oder durch Abklatsch in einer Rolle nach dem Druck auf die Rückseite des darüber befindlichen Substrats übertragen wurden. Auch können Druckfarbenbestandteile durch den Bedruckstoff hindurch migrieren. Eine Migration von Druckfarbenbestandteilen oder ein Abklatsch von Druckfarben kann bei Verpackung zu einer sensorischen Beeinflussung des Füllgutes führen. Bei Überschreiten von spezifischen Migrationlimits kann im Falle einer Verpackung für Lebensmittel eine gesundheitliche Beeinträchtigung des Konsumenten nicht ausgeschlossen werden. Bei Überschreiten der spezifischen Migrationlimits müssen Verpackungen auf jeden Fall aus dem Verkehr gezogen werden, was neben dem finanziellen Folgen meist auch ein Verlust der Reputation des Markenherstellers im Markt zur Folge hat. Die Wahrung der gesundheitlichen Unbedenklichkeit ist vorrangig. Laut §30 LMBG ist es verboten Bedarfsgegenstände so herzustellen, dass sie bei bestimmungsgemäßen Gebrauch geeignet sind, die Gesundheit durch ihre stoffliche Zusammensetzung, insbesondere durch toxikologisch wirksame Stoffe oder Verunreinigungen zu schädigen. Zudem gilt nach deutschem und europäischem Recht und ebenso in den USA das "No-Migration-Prinzip", d.h. ein Übergang von Stoffen auf das verpackte Lebensmittel ist zu vermeiden. Deswegen ist es besonders wichtig auf jeden Fall die Vernetzung der strahlenhärtenden Druckfarbe auf dem Bedruckstoff sicher zu stellen.

Auch haben unvollständig ausgehärtete strahlenhärtende Druckfarben und Lacke Auswirkungen auf die Sicherheit des Bedienpersonals. Sind solche Druckfarbenoder Lackschichten auf dem Bedruckstoff unvollständig durchgehärtet und der Maschinenbediener zieht, z. B. zur Kontrolle der Druckqualität, Probeexemplare, so können migrationsfähige Bestandteile der Druckfarben über die Haut aufgenommen werden. Neben gesundheitlicher Gefährdung können auch Reizungen und allergische Reaktionen der Haut entstehen. Dem Druckbetrieb entstehen durch unvollständig ausgehärtete Lacke und Druckfarben zusätzlich Entsorgungskosten, da Druckbögen mit unvernetzten Druckfarben- oder Lackbestandteilen in der Regel als Sonderabfall behandeln werden. Dies erfordert einen logistischen Mehraufwand und erzeugt in der Regel Mehrkosten für die Entsorgung.

Viele Faktoren sprechen folglich dafür die Aushärtung bzw. Trocknung von Druckfarben- und Lackschichten auf dem Bedruckstoff zu messen, Messgrößen zu bilden und diese dann direkt oder über Bedienereingabe zur Steuerung der Trockner heranzuziehen. Zusätzlich können aus diesen Messwerte eine Qualitätsprotokoll abgeleitet werden, dass dem Enduser einen Nachweis gibt, dass die Druckfarbe oder der Lack ausreichend ausgehärtet sind. Dies wird gerade auf dem Feld der strahlenhärtenden Druckfarben und Lacke aus Erwägungen der Produktsicherheit oftmals gefordert.

Der Wunsch die Härtung bzw. Trocknung von Druckfarben- oder Lackschichten zu bewerten wurde schon vielfach diskutiert. In der EP 1 142 711 B1 wurde unter anderem vorgeschlagen, eine Steuerung für eine Trocknereinrichtung vorzusehen, der mindestens ein Signal einer den Druckprozess charakterisierenden Größe zugeführt wird, und dass infolgedessen durch die Steuerung Signale generiert werden, durch welche die Betriebsweise der Trocknereinrichtung in vorgesehener Weise verändert wird. Es wird auch vorgeschlagen die Steuerung der Trocknervorrichtung anhand von am Bedruckstoff gemessenen Messwerten vorzunehmen. Als Messgrößen werden die Lack- bzw. die Farbschichtdicke und / oder der Glanz des Lackauftrags angeführt.

Die DE 197 37 785 A1 schlägt vor den Trocknungsgrad einer Lackschicht durch das Messen der Intensität eines Mikrowellensignals, das in einer Wechselwirkung mit dem lackierten Bedruckstoff in Wechselwirkung steht zu bestimmen. Die aus dem Messsignal gebildete Zustandsgröße kann dann als Regelgröße für die Trocknersteuerung herangezogen werden. Das Verfahren eignet sich aber nur für den Einsatz von Beschichtungsmedien, die in einem hohen Maße die Mikrowellenenergie absorbieren, wie zum Beispiel eine Dispersionslack, der im wesentlichen Wasser als Lösemittel aufweist. Die Prüfung der Polymerisation von gehärteten Druckfarben- und Lackschichten wurde in dem Patent nicht erwähnt.

Die DE 24 58 935 A1 offenbart ein Mess- und Regelverfahren der Geschwindigkeit von Druck- und Beschichtungsmaschinen, bei dem kontinuierlich auf der Papierbahn die den benutzten Lösemitteln entsprechenden Wellenlängen analysiert werden, wobei die nach dem Trocknen gemessenen Durchschnittswerte mit den voreingestellten Maximalwerten vergleicht. Die Messeinrichtung enthält einen Analysatorkopf mit kontinuierlicher Ausstrahlung und einen Empfänger zur Aufnahme der Strahlung, die das zu analysierende Produkt reflektiert oder diese durchsetzt. Der Nachteil dieses Verfahrens ist, dass von vornherein die Lösemittelzusammensetzung bekannt sein muss. Dies ist bei Druckverfahren, die mit einfachen Lösemittelzusammensetzungen arbeiten relativ einfach, die Komplexität steigt bei modernen Druckfarben mit einer Vielzahl von Lösemittel an. Im Regelfall gibt der Lieferant die Zusammensetzung der Druckfarbe nur in groben Bestandteilen bekannt. Außerdem versagt dieses Verfahren bei Druckverfahren, die keine Lösemittel emittieren. Dies sind unter anderem die strahlenhärtenden Druckverfahren, sowie die oxidativ und wegschlagenden Druckverfahren. Dieses Messverfahren ist nicht universell anwendbar. Auch ist eine Anwendung bei schnell laufenden Druckmaschinen bekannt, da die Analyse doch zeitintensiv und komplex ist.

Im Labor wird optische Spektroskopie zur Beurteilung der Polymerisation eingesetzt. Diese Methode ist wegen ihrer Komplexität und Probenvorbereitung wenig für den Einsatz in dem rauen Maschinenumfeld eines Druckereibetriebs geeignet. Ultraschallmessungen sind in der Druckindustrie als Messmittel bekannt. Testmethoden mit Ultraschall haben den Vorteil, dass sie nicht invasiv, nicht destruktiv Techniken sind Eigenschaften eines Materials zu bestimmen.

Ein bekannter Ansatz die Festigkeit von Papierbahnen zu überprüfen ist die Messung der Ausbreitungsgeschwindigkeit und -intensität von Schallwellen in diesen. Materialien. In der DE 30 45 581 A1 werden ein solches Verfahren und eine Vorrichtung zur zerstörungsfreien Untersuchungen von Papier bei der Herstellung in einer fortlaufenden, sich schnell bewegenden Bahn beschrieben. Bei diesem Verfahren wird ausgenutzt, dass viele Festigkeitsparameter von Papier in einer Beziehung zu einem Elastizitätsmodul stehen. Letzteres kann mit der Geschwindigkeit von Schallwellen korreliert werden, die sich durch die Papierbahn fortpflanzen. Ein sendender Schallgeber bzw. Wandler sendet ein mechanisches Signal zu dem Papier, und ein Empfänger empfängt das Ultraschallsignal vom Papier. Durch die Kenntnis der Zeit, die Ultraschallwellen zur Fortpflanzung durch das Papier benötigen, und der Entfernung die diese Schallwellen zurücklegen, kann die Geschwindigkeit der Ultraschallwellen berechnet werden. Die Wandler sind gemäß dieser Erfindung in Rädern angeordnet, die sich im physikalischen Kontakt mit der Papierbahn befinden. Diese Berührung und die hohen Anforderungen an die Synchronisation der Räder mit den Wandlern macht die Erfindung nicht sehr praktikabel. Eine solche Messung auf bedruckten Papierbahnen erscheint durch die Berührung sehr schwierig.

Wünschenswert wäre daher eine Messung, die eine nicht berührende Einkoppelung von Schallwellen erfolgt. Die DE 103 18 104 A1 schlägt als berührungslose Messung der Lappigkeit einer Banknote vor, diese mit Schallwellen zu bestrahlen, die von dem Blattgut ausgehende Schallwellen zu erfassen, wobei transmittierte und reflektierte Schallwellen erfasst werden und daraus Werte für die Lappigkeit des Blattgutes abgeleitet werden, die unabhängig von dem Verschmutzungsgrad der Banknote sind. Der Nachteil der gefundenen Lösung besteht unter anderem darin, dass die Schallempfänger an beiden Seiten des Papiers angeordnet sind. Außerdem werden nur transmittierte oder reflektierte Schallwellen bewertet, die Fortpflanzung der Schallwellen an der Oberfläche wird nicht berücksichtigt.

Weiterhin ist in der Wissenschaft die Bewertung von SAW (surface acoustic waves) als Methode in zerstörungsfreien Prüfverfahren bekannt.

Ziel der Erfindung ist es die Aushärtung bzw. Trocknung von Lack- und Druckfarbenschichten auf Papier-, Folien-, oder Kartonbedruckstoffen zu bestimmen.

Diese Aufgabe wird gelöst durch Merkmale des Anspruchs 1.

Sinnvolle Weiterbildungen ergeben sich aus den Unteransprüchen.

Die in die Oberfläche induzierten Wellen breiten sich als Oberflächenwellen mit einer Geschwindigkeit von einigen Kilometern pro Sekunde an der Oberfläche des Festkörpers aus. Mit der Laufzeit und der Dämpfung des Oberflächenwellensignals lassen sich Rückschlüsse auf die verschiedenste Einflussfaktoren auf die Oberfläche in qualitativer und quantitativer Hinsicht ziehen.

Die mechanischen Auslenkungen und sämtliche anderen mit der Oberflächenwelle einhergehenden Größen klingen exponentiell innerhalb etwa einer Wellenlänge ins Volumen hinein ab. Die Konzentration akustischer Energie an der Oberfläche machen daher die Oberflächenwellen für die Sensorik (und durch die dadurch zu beobachtenden physikalischen Kenngrößen) äußerst interessant.

Das Verfahren zeichnet sich dabei durch folgende kennzeichnende Merkmale aus:

- Einflüsse von außen können frühzeitig erkannt werden, da Änderungen direkt an Grenzflächen zur Umgebung detektiert werden. In der praktischen Anwendung sind gemessene Einflüsse meist elektronischer oder mechanischer Natur.
- Die Beschränkung der mit der Welle einhergehenden Größen an die Oberfläche macht den Sensor bereits auf relativ kleine Einflüsse äußerst sensitiv.
- Die Wellenlänge der damit erzeugten Oberflächenwelle liegt um einige Größenordnungen über den atomaren Abständen in Farb- und / oder Lackfilm.

Die Erfindung wird im Folgenden anhand einiger graphischer und schematischer Darstellungen näher erläutert.

Darin zeigen

Figur 1: eine Graphik zum Frequenzspektrum (Beginn der Bestrahlung mit UV-Licht zur Polymerisation des Farbfilms, siehe Diagrammmitte),

Figur 2: eine Graphik zur gemessenen Veränderung der Amplitude in einer Oberflächenwelle über der Zeit; Farbton Gelb,

Figur 3: eine Graphik zur Messung der Veränderung der Amplitude über der Zeit; Farbton Magenta,

Figur 4: eine Graphik zu Ausbreitung der Oberflächenwelle in X-Richtung,

Figur 5: eine kammartige Elektrodenstruktur mit der entsprechenden Apertur, und

Figur 6: eine Graphik zum Energiefluss und zur Energieflussrichtung einer Oberflächenwelle

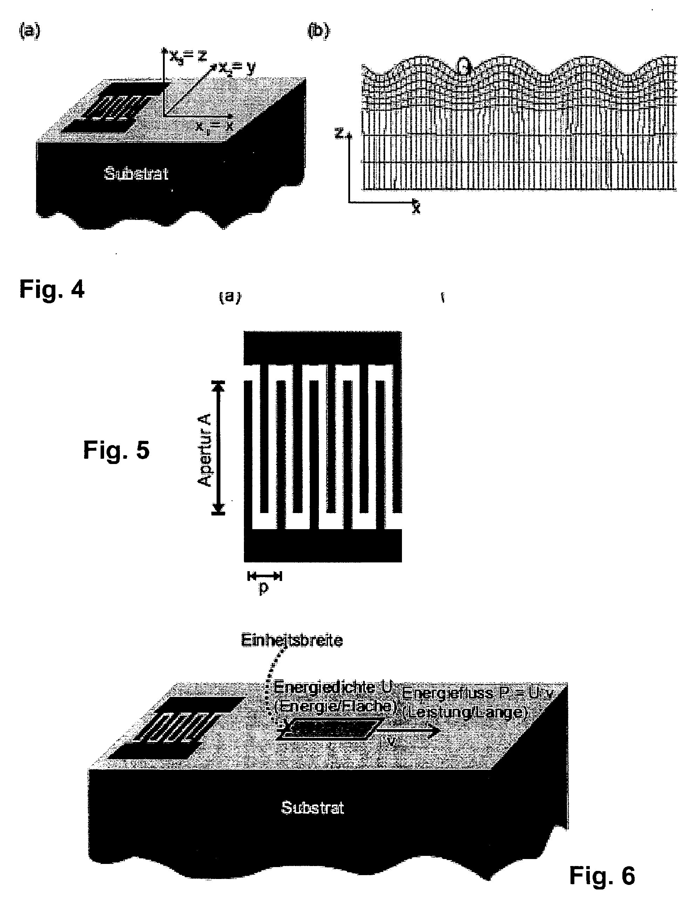

Die Erzeugung und Detektion einer Oberflächenwelle geschieht durch ein piezoelektrisches Material, wobei die Steuerspannung und das gewonnene Signal über eine kammartige auf dem Piezomaterial aufgebrachte Elektrodenstruktur eingebracht und ausgelesen werden. Man spricht auch von interdigitalen Schallwandlern (IDT). Die einzelnen Zinken der kammartigen Struktur greifen dabei, wie in den Figuren 4 bis 6, insbesondere aber in Figur 5, gezeigt, ineinander. Die eine Kammstruktur dient dabei als Aktor über die die Schallwellen in das Material induziert werden und die andere gegenüberliegende Kammstruktur als Sensor. An die als Aktor dienende Kammstruktur wird ein hochfrequentes elektromagnetisches Wechselspannungssignal angelegt. Der inverse piezoelektrische Effekt sorgt dafür, dass das Substrat abwechselnd gedehnt und gestaucht wird. Diese Dichtemodulationen breiten sich mit Schallgeschwindigkeit aus und erfahren beim nächsten Fingerpaar eine zusätzliche verstärkende Modulation, falls die Resonanzbedingung $f = \lambda/v$ zwischen angelegter Frequenz f, Schallgeschwindigkeit v und Wellenlänge $\lambda$ erfüllt ist. Der Abstand der einzelnen Finger, auch als Apertur A bezeichnet, bestimmt die Wellenlänge und hat damit Einfluss auf deren Empfindlichkeit. Zusammen mit der Schallgeschwindigkeit wird für die so beschriebene Anordnung die Frequenz festgelegt, bei der eine Schallwelle angeregt werden kann.

Die Detektion der Oberflächenwelle erfolgt ebenfalls mit. Hilfe einer solchen Elektrodenstruktur mit dem piezoelektrischen Effekt, nachdem sich die Oberflächenwelle von dem erzeugenden zum detektierenden Schallwandler ausgebreitet hat. Diese Wandler übersetzen also erst einmal ein elektromagnetisches Signal in eine elektromechanisch gekoppelte Bewegung, die nach Ende der Laufzeit in ein elektromagnetisches Hochfrequenzsignal zurückübersetzt wird. Die Art und Weise wie das zurückübersetzte Signal mit dem Eingangssignal zusammenhängt wird durch die Schallwandler-Struktur maßgeblich bestimmt.

Es wird eine Oberflächenwelle erzeugt, die auf einem schmalen Schallpfad propagiert. Die Lage des Schallpfades lässt sich entlang der Apertur A mit der Frequenz definieren bzw. einstellen. Mit dem Durchfahren eines Frequenzbereichs zwischen minimaler und maximaler Resonanzfrequenz, das entspricht näherungsweise dem Abtasten zwischen der größten und kleinsten Periodizität $p0$ bzw. $p1$, lässt sich der Bereich zwischen den Schallwandlern abrastern. Findet zwischen Sende- und Empfängerschallwandler eine Veränderung statt, so ist die Auswirkung in der Differenz des Transmissionssignals vor und nach der Veränderung sichtbar. Kombiniert man diese Messung mit dem Abtasten der Frequenz, kann die räumliche Position der Veränderung entlang der Apertur A in einer Dimension bestimmt werden.

Die Geschwindigkeit der Oberflächenwelle auf einem piezoelektrischen Substrat ist von den verschiedenen Materialparametern abhängig. Zwar lässt sich kein analytischer Ausdruck für den Kopplungskoeffizienten abhängig von den Materialparametern finden, doch kann man davon ausgehen, dass dieser analog zum Kopplungskoeffizienten der Volumenmode von den mechanischen, piezoelektrischen und dielektrischen Konstanten abhängt.

Ein Sensor soll die zu detektierenden Veränderungen bestmöglich erfassen, um damit Rückschlüsse auf die beteiligten Materialparameter zu erlauben, die die Ausbreitungsgeschwindigkeit der Oberflächenwelle bestimmen. Der Charakter der Wellenfortpflanzung kann durch zusätzliche Beschichtungen zusätzlich beeinflusst werden (Wellendämpfung, Wellenfortpflanzungsgeschwindigkeit).

Die Wechselwirkung zwischen der Oberflächenwelle und der zu messenden Materialschicht sind entweder mechanischer oder elektrischer Natur. Bei der mechanischen Wechselwirkung wird die Veränderung der elastischen Konstanten und / oder der Massendichte beobachtet. Die elektrische Wechselwirkung lässt sich durch die piezoelektrischen Felder beobachten, die die mechanischen Auslenkungen durch die Oberfläche begleiten (siehe Fig. 4).

Es zeigt sich, dass diese Messverfahren sich auch für die Bestimmung der Materialeigenschaften extrem dünner Schichten auf einem Trägersubstrat eignen. Im Druck werden dünne Farb- und Lackschichten in einem Dickenbereich von 0,75 - 6 $\mu$m auf Papier und Kunststoff als Trägermaterial aufgetragen. Bisher wurde die Bestimmung der Materialeigenschaften durch Oberflächenwellen nur auf deutlich dickere Schichten angewandt.

Bei der Aushärtung (Polymerisation) oder Trocknung des Farb- oder Lackfilms erfahren der Massezustand und die damit verbundenen viskoelastische Eigenschaften des Farb- oder Lackfilms eine Veränderung.

Der größte Teil der Energie der Oberflächenwelle steckt in den Dichtemodulationen des zu messenden Materials. Eine direkte Einwirkung von außen auf die Dichtemodulation hat daher ebenfalls eine starke Wirkung auf die Oberflächewelle und kann damit messbar gemacht werden.

Betrachtet man den Farb- oder Lackfilm modellhaft aufgebaut als ein Material bestehend aus einzelnen Massepunkten, die mit Federn untereinander verbunden sind, so resultiert die Dichtemodulationen aus den kollektiv schwingenden Massenpunkten. Änderungen in der Masse einzelner Massepunkte oder die Änderung der Federkonstanten haben Auswirkung auf die Dichtemodulation und damit auf die Schallwelle. Das relevante Dichtemaß ist dabei nicht die Volumenmassedichte sondern die Flächenmassendichte.

Mit zusätzlicher Masse, z. B. aufgrund stärkerer Vernetzung durch die Polymerisation, kann diese verändert werden. Die Oberflächenwelle hat eine Anfangsenergie, die sie auf dem Fortpflanzungspfad verliert. Dieser Energieverlust zur Isothermenbestimmung verwendet und als eine erste Größe beobachtet werden. Zusätzlich zur reinen Massenzunahme wird die Abhängigkeit der elastischen Konstanten des Filmes auf der Oberfläche angegeben, also werden letztlich viskoelastische Effekte behandelt.

Die Oberflächenwelle transportiert dabei Energie, deren zugehöriger Energiefluss $P$ (Leistung/Länge) der Intensität der Oberflächenwelle entspricht. Der Energiefluss ist abhängig von Energiedichte $U$ (Energie/Fläche) und Geschwindigkeit des Flusses, welche der Oberflächenwellengeschwindigkeit entspricht (siehe Fig. 6). Die Intensität lässt sich durch folgende Gleichung beschreiben:

$$P = U \cdot v$$

und bleibt unter Vernachlässigung von Energiedissipation über die gesamte Laufstrecke hinweg konstant. Ändert sich die Energiedichte auf der Laufstrecke der Welle, so muss sich die Wellengeschwindigkeit ändern.

Die Aushärtung des Farb- oder Lackfilms hat eine Änderung der Masse des Farb- oder Lackfilms zur Folge. Durch die Beobachtung des Masseverhaltens lässt sich für einen dünnen, nicht dämpfenden Farb- oder Lackfilm durch die Veränderung der mechanischen und viskoelastischen Eigenschaften der Verlauf des Aushärtungs- oder Trocknungsprozess bestimmen.

Akustische Oberflächenwellen werden auf piezoelektrischen Substraten mit so genannten interdigitalen Schallwandlern erzeugt und detektiert. Mit mechanischen Auslenkungen der Welle gehen elektrische Felder einher, wodurch die Oberflächenwellen entsprechend auf elektronische und mechanische Einwirkungen reagiert. Mit dem Einsatz fächerförmiger Wandlerstrukturen kann darüber hinaus die Position eines schmalen Schallstrahls mit der angelegten Frequenz eingestellt werden. Eine lokale Einwirkung auf die Oberfläche lässt sich so in einer Dimension ortsaufgelöst mit der Frequenz abtasten. Wir haben dünne Farbfilme in einem Schichtdickenbereich von 1- 2 $\mu$m auf dem Substrat bezüglich deren Änderungen in den Massenbelag untersucht.

Der Film befindet sich auf einem piezoelektrischen Substrat im Kreuzungsgebiet zweier Verzögerungsleitungen. Zuerst wird mit konventionellen Schallwandlern die nichtlineare Wechselwirkung zwischen den senkrecht zueinander propagierenden Oberflächenwellen nachgewiesen. Die Kopplung existiert, wenn eine Oberflächenwelle das Ladungsträgersystem im Kreuzungsgebiet für die senkrecht dazu verlaufenden Oberflächenwellen spürbar moduliert. Aus der Größe der Kopplung kann die Ladungsträgerdichte bestimmt werden. Mit fächerförmigen Schallwandlern kann der Kreuzungsbereich auf die Breite der schmalen Schallpfade eingeschränkt werden. Jedes dieser kleinen Kreuzungsgebiete entspricht einer Art Bildelement, das mit dem zugehörigen Wertepaar der Frequenzen angesteuert bzw. ausgelesen werden kann. Mit dem Abtasten der Frequenzen lässt sich die gesamte Ladungsträgerverteilung abbilden.

Im Folgenden werden Messergebnisse näher beschrieben.

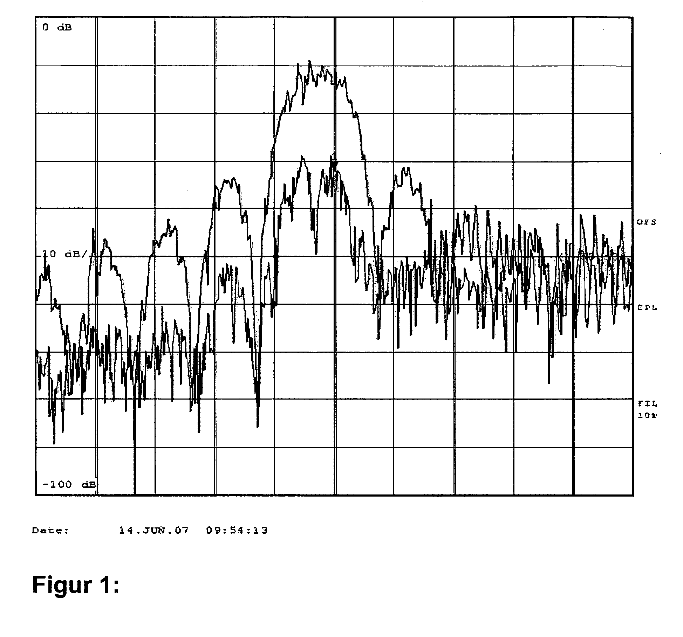

Das in einer Grafik in Figur 1 gezeigte Spektrum zeigt die Wellenfrequenz vor und nach der Bestrahlung gemessen an einem magenta- und cyanfarbigen Farbfilm von UV-härtenden Druckfarben in der ungefähren Farbfilmstärke von 1,5 $\mu$m. Hierzu erfolgt die Messung in situ und die UV-Bestrahlung wird etwa in der Mitte des Spektrums zugeschaltet. Dabei zeigt sich, dass die Veränderung des Spektrums durch die UV-Aushärtung und die damit verbundene Aushärtung sehr deutlich auch für den ungeübten Betrachter erkennbar ist.

Die Messfrequenz ist durch mehrere Referenzmessungen feststellbar. Dabei ist festzustellen, dass das Messverfahren nur in einem sehr engen Frequenzbereich funktioniert, dass dort aber deutliche Signalveränderungen erkennbar sind. Eingesetzt wurde als Drucksubstrat Polypropylen (PP) und dazu eine UV-Druckfarbe.

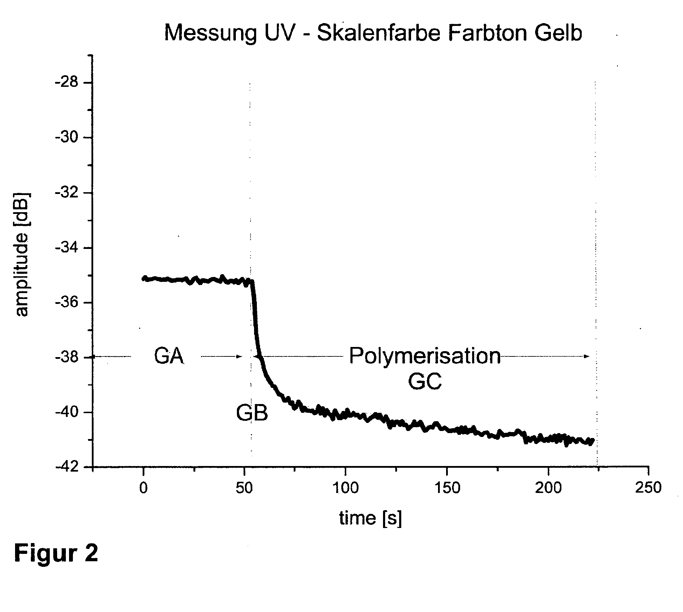

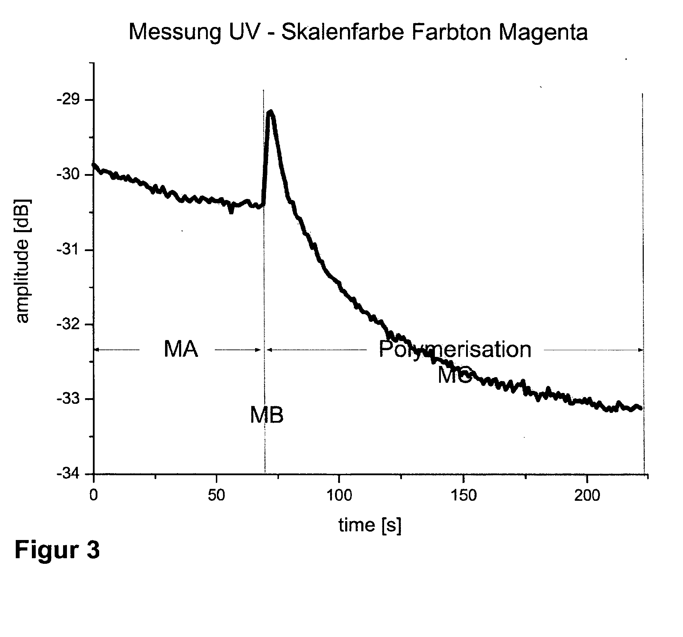

Die Grafiken in den Figuren 2 und 3 zeigen die Veränderung der Amplitude der Oberflächenwelle über die Zeit. Die Grafik in Figur 2 zeigt die Veränderung für den Skalenfarbton Gelb. Der Bereich GA beschreibt den Zeitraum vor der Bestrahlung mit UV-Licht, GB den Zeitpunkt des Beginns der Bestrahlung und GC den Bereich des fortschreitenden Polymerisationsprozesses unter Bestrahlung. Die Messungen wurden in Realtime protokolliert und zeigen ein sehr deutliches Signalverhältnis vor und nach der Bestrahlung, aus denen Kennwerte für den Grad und den Fortschritt der Polymerisation des Farbfilms gezogen werden können. Die Grafik in Figur 3 zeigt denselben Verlauf für den Farbton Magenta. Der Zeitraum MA beschreibt den Zeitraum vor der Bestrahlung mit UV-Licht, der Punkt MB den Zeitpunkt Beginn der Bestrahlung MC den Bereich des fortschreitenden Polymerisationsprozesses unter Bestrahlung. Auch diese Messung wurde Realtime in situ vorgenommen. Aus dem Verlauf der Amplitudenkurve nach dem Beginn der Bestrahlung ist deutlich zu erkennen, dass der Farbton Gelb deutlich schneller aushärtet. als der Farbton Magenta. Dies ist auch mit anderen Messverfahren erkennbar, zum Beispiel mit der Realtime-FTIR, aber diese Meßmethoden sind relativ teuer und auch nicht in der Praxis einsetzbar. Die erfindungsgemäße Messmethode ist dagegen deutlich günstiger, handlich und ohne große Schulung in der Produktionspraxis anwendbar.

Die beschriebenen Messungen zeigen den großen Vorteil dieser Meßmethode gegenüber anderen, zum Beispiel optischen Meßmethoden, da die erfindungsgemäß gefundene Methode unabhängig von der Zusammensetzung der Probe funktioniert. Das Verfahren wurde noch nie für die Messung von dünnen gedruckten Farb- und Lackschichten in den üblichen Dicken von 1 - 5 $\mu$m Schichtdicke beschrieben. Bisherige Messungen gingen zusätzlich von festen Materialien oder Trägerkörpern aus, so dass die erzielten Messergebnisse einen bedeutenden wissenschaftlichen und technischen Fortschritt in der Bestimmung des Polymerisationsgrades und der Polymerisationsgeschwindigkeit bieten. Aus diesen Ergebnissen lassen sich Kennwerte oder Steuerungsgrößen für Druckmaschine und / oder Trockner- und Härtungsaggregate ableiten, die eine energieeffiziente und umweltgerechte Produktion ermöglichen. Durch die Qualifizierung der Aushärtung eines Farb- oder Lackfilms kann der Anwender auch dem Endkunden eine sichere und qualitätsorientierte Produktion nachweisen. Ein Punkt, der im Rahmen der Produktsicherheits- und Umweltdebatte immer höhere Bedeutung erlangt.

**Patentansprüche**

1.　Verfahren zur Bestimmung des Härtungs- oder Trocknungsgrades einer oder mehrerer gedruckter Druckfarben- und / oder Lackschicht/en auf einem Substrat, zum Beispiel Papier, Karton, Kunststofffolie oder Verbundmaterialien, wobei als Druckverfahren eines der Massendruckverfahren Tief-, Flexo-, Sieb- oder Offsetdruck zur Anwendung gekommen, **gekennzeichnet dadurch, dass** der Härtungsgrad bzw. Trocknungsgrad indirekt über die Veränderung der mechanischen und / oder viskoelastischen Eigenschaften der Druckfarben- und/oder Lackschichten auf dem Substrat durch den Härtungs- bzw. Trocknungsvorgang bestimmt werden.

2.　Verfahren nach Anspruch 1, **gekennzeichnet dadurch, dass** in der Druckfarben- oder Lackschicht eine Oberflächewelle erzeugt und die Energiedichte auf der Laufstrecke der Oberflächenwelle ausgewertet wird.

3. Verfahren nach Anspruch 1 oder 2, **gekennzeichnet dadurch, dass** die Oberflächenwelle piezoelektrisches Material erzeugt wird, auf eine Elektrodenstruktur mit ineinander greifenden kammartigen Teilstrukturen zugeordnet ist.

4. Verfahren nach Anspruch 3, **gekennzeichnet dadurch, dass** an einer Teilstruktur ein hochfrequentes elektromagnetisches Signal angelegt wird, wodurch ein inverser piezoelektrischer Effekt erzeugbar ist, mittels dessen, dass das Substrat abwechselnd gedehnt und gestaucht wird.

5. Verfahren nach Anspruch 3 oder 4, **gekennzeichnet dadurch, dass** mittels des Abstandes der Kammelemente die Wellenlänge des Signals bestimmt wird.

6. Verfahren nach Anspruch 3 bis 5, **gekennzeichnet dadurch, dass** in Verbindung mit der Schallgeschwindigkeit die Schallfrequenz bestimmt wird, bei der eine Oberflächenwelle angeregt werden kann.

7. Verfahren nach Anspruch 6, **gekennzeichnet dadurch, dass** in Verbindung mit der Schallgeschwindigkeit zur Messung an Farb- und Lackschichten die Schallfrequenz vorzugsweise zwischen 5 und 100 MHz gewählt wird.

8. Verfahren nach Anspruch 3 bis 7, **gekennzeichnet dadurch, dass** die Detektion der Oberflächenwelle mit einer kammartigen Elektrodenstruktur durch den piezoelektrischen Effekt erfolgt, nachdem die Oberflächenwelle sich von der erzeugenden zur detektierenden Schallwandlerstruktur ausgebreitet hat.

9. Verfahren nach Anspruch 3 und 8, **gekennzeichnet dadurch, dass** die als Aktor wirkende Elektrodenstruktur ein elektromagnetisches Signal in eine elektromechanisch gekoppelte Bewegung übersetzt, die nach Durchlaufen des Materials in ein elektromagnetisches Hochfrequenzsignal durch die als Sensor wirkende Elektrodenstruktur zurückübersetzt wird, wobei die Art der Rücktransformation des Signals mit dem Eingangssignal korreliert, das durch die Elektrodenstruktur bestimmt wird.

10. Verfahren nach Anspruch 1 bis 5 oder 8, **gekennzeichnet dadurch, dass** eine Oberflächenwelle erzeugt wird, die auf einem schmalen Schallpfad propagiert.

11. Verfahren nach Anspruch 1 bis 5, **gekennzeichnet dadurch, dass** die Messung so erfolgt, dass sich die Position des Schallpfades entlang einer Apertur A der Elektrodenstruktur mit der Frequenz einstellen lässt.

12. Verfahren nach Anspruch 1 bis 5, **gekennzeichnet dadurch, dass** eine direkte Einwirkung von außen auf die Dichtemodulation erfolgt, so dass eine starke Wirkung auf die Oberflächenwelle erzeugbar und **dadurch** messbar ist.

13. Verfahren nach Anspruch 1 bis 12, **gekennzeichnet dadurch, dass** Echos der Schallwellen in transversaler und/oder longitudinaler Richtung erfasst werden.

14. Verfahren nach Anspruch 13, **gekennzeichnet dadurch, dass** aus der Auswirkung der Änderung der Masse oder Federkonstante einzelner Massenpunkte auf die Dichtemodulation Änderungen auf die Schallwelle erfassbar sind.

15. Verfahren nach Anspruch 13, **gekennzeichnet dadurch, dass** für die Messung als relevante Massendichte für die Oberflächewelle die Flächendichte vorgesehen ist, und dass mit Erhöhung der Masse auf der Oberfläche die Oberflächewelle einfach veränderbar ist.

16. Verfahren nach Anspruch 14 oder 15, **gekennzeichnet dadurch, dass** bei der Messung aus der Änderung der Massenzunahme ein quantitativer und/oder. qualitativer Wert ermittelt wird, der von den elastischen Konstanten eines Films auf der Oberfläche abhängig ist.

17. Verfahren nach Anspruch 3 bis 16, **gekennzeichnet dadurch, dass** die Oberflächenwelle Energie transportiert und ein dieser zugehöriger Energiefluss (Leistung / Länge) mit der Intensität der Oberflächenwelle korreliert.

18. Verfahren nach Anspruch 1 oder 2, **gekennzeichnet dadurch, dass** die Oberflächenwellengeschwindigkeit aus Abhängigkeit des Energieflusses von der Energiedichte (Energie/Fläche) und der Geschwindigkeit des Energieflusses erfassbar ist, wobei die Geschwindigkeit des Energieflusses der Oberflächenwellengeschwindigkeit entspricht.

19. Verfahren nach Anspruch 17 oder 18, **gekennzeichnet dadurch, dass** beim Messen berücksichtigt wird, dass Verluste der Energiedichte auf der Laufstrecke der Oberflächenwelle zu Änderungen der Wellengeschwindigkeit führen.

20. Verfahren nach Anspruch 19, **gekennzeichnet dadurch, dass** die Messung erfolgt auf der Basis, dass die Energieverluste infolge der Erhöhung der Massenbelag stattfinden.

21. Verfahren nach Anspruch 16 oder 17, **gekennzeichnet dadurch**, die Messung erfolgt auf der Basis, dass zusätzlicher Massenbelag eine Erhöhung der Viskosität des gemessenen Films bedeutet.

22. Verfahren nach Anspruch 20 oder 21, **gekennzeichnet dadurch, dass** die Messung erfolgt auf der Basis, dass die Viskositätsänderung des Farb- oder Lackfilms eine Folge der Aushärtung des Films durch Bestrahlung, wie mit UV- oder Elektronenstrahlung, oder der Trocknung, wie mit Infrarot- und / oder Warmluft zur Ursache hat.

23. Verfahren nach Anspruch 1 bis 22, **gekennzeichnet dadurch, dass** in einem dünnen, nicht dämpfenden und annähernd isotropen Farbfilm anhand der Veränderung der mechanischen viskoelastischen Eigenschaften der Verlauf des Aushärtungs- oder Trocknungsprozesses des Farb- oder Lackfilms beobachtet wird.

24. Verfahren nach Anspruch 1 bis 23, **gekennzeichnet dadurch, dass** aus dem Ergebnis der Signalanalyse automatisch Steuersignale für die Veränderung der Einstellung der die der Trocknung bzw. Härtung beeinflussenden Prozessparameter, wie Trocknereinstellung, Produktionsgeschwindigkeit etc., gewonnen werden und diese an eine oder mehrere Steuereinrichtung weitergegeben wird, direkt oder nach Bedienerfreigabe die Veränderung der Prozessparameter vollzieht.

25. Verfahren nach Anspruch 1 bis 23, **gekennzeichnet dadurch, dass** die Messung außerhalb der Druckmaschine mit einer separaten Messvorrichtung erfolgt.

26. Verfahren nach Anspruch 1 bis 23, **gekennzeichnet dadurch, dass** die Messung während des Druckprozesses mittels einer Messeinrichtung innerhalb der Druckmaschine erfolgt.

27. Verfahren nach Anspruch 24 oder 25, **gekennzeichnet dadurch, dass** Druckprodukte gemessen werden, die in Rollendruckmaschinen hergestellt werden.

28. Verfahren nach Anspruch 24 oder 25, **gekennzeichnet dadurch, dass** Druckprodukte gemessen werden, die in Bogendruckmaschinen hergestellt werden.

29. Verfahren nach Anspruch 1 bis 23, **gekennzeichnet dadurch, dass** die Bestimmung der Veränderung der mechanischen und / oder viskoelastischen Eigenschaften der Druckfarben und / oder Lackschichten auf dem Substrat an strahlenhärtenden Druckfarben und / oder Lackschichten erfolgt, die mit UV-Strahlung oder Elektronenstrahltrocknung gehärtet wurden.

30. Verfahren nach Anspruch 1 bis 23, **gekennzeichnet dadurch, dass** die Bestimmung der Veränderung der mechanischen und / oder viskoelastischen Eigenschaften der Druckfarben und / oder Lackschichten auf dem Substrat an lösemittelhaltigen oder wasserhaltigen Druckfarben und / oder Lacken erfolgt.

31. Vorrichtung zur Durchführung des Verfahrens nach Anspruch 1 zur Bestimmung des Härtungs- oder Trocknungsgrades einer oder mehrerer gedruckter Druckfarben- und / oder Lackschicht/en auf einem Substrat, zum Beispiel Papier, Karton, Kunststofffolie oder Verbundmaterialien, wobei als Druckverfahren eines der Massendruckverfahren Tief-, Flexo-, Sieb- oder Offsetdruck zur Anwendung gekommen, **gekennzeichnet dadurch, dass** die Oberflächenwelle durch ein piezoelektrisches Material erzeugt wird, wobei auf dem piezoelektrischen Material eine kammartige Elektrodenstrukturen aufgebracht ist.

32. Vorrichtung nach Anspruch 32, **gekennzeichnet dadurch, dass** die kammartige Elektrodenstruktur zwei Teilstrukturen aufweist, deren einzelnen Zinken, wie Finger, ineinander greifen.

33. Vorrichtung nach 33, **gekennzeichnet dadurch, dass** die Elektrodenstruktur mit einer Steuerung verbunden ist, mittels derer an wenigstens eine Teilstruktur der kammartigen angeordneten Elektrodenstruktur ein hochfrequentes elektromagnetisches Signal anlegbar ist, derart, dass ein inverser piezoelektrischer Effekt dazu führt, dass das Substrat abwechselnd gedehnt und gestaucht wird.

34. Vorrichtung nach Anspruch 30 bis 33, **gekennzeichnet dadurch, dass** mittels des Abstandes der einzelnen Elemente als Apertur (A) die Messcharakteristik der kammartigen Elektrodenstruktur bestimmbar ist.

35. Vorrichtung nach Anspruch 34, **gekennzeichnet dadurch, dass** der Abstand der einzelnen Elemente der kammartigen Elektrodenstruktur die Wellenlänge des Signals bestimmt.

36. Vorrichtung nach Anspruch 30 bis 35, **gekennzeichnet dadurch, dass** Empfänger zur Erfassung von Signalen aus Echos der Schallwellen in transversaler und/oder in longitudinaler Richtung vorgesehen sind.

37. Vorrichtung nach Anspruch 30 bis 36, **gekennzeichnet dadurch, dass** die Steuerung ausgebildet ist, um zusammen mit der Schallgeschwindigkeit die Schallfrequenz einer anzuregenden Oberflächenwelle für die Messung auf Farb- und Lackschichten vorzugsweise zwischen 5 und 100MHz einzustellen.

**38.** Vorrichtung nach Anspruch 30 bis 37, **gekennzeichnet dadurch, dass** die Messeinrichtungen per Datenleitung oder Datenfunk mit einer Maschinensteuerung der Druckmaschine verbunden sind.

Date:      14.JUN.07   09:54:13

# Figur 1:

Messung UV - Skalenfarbe Farbton Gelb

**Figur 2**

## Messung UV - Skalenfarbe Farbton Magenta

**Figur 3**

(a)

(b)

# Fig. 4

(a)

(

# Fig. 5

Apertur A

p

Einheitsbreite

Energiedichte U
(Energie/Fläche)

Energiefluss P = U v
(Leistung/Länge)

v

Substrat

# Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1142711 B1
- DE 19737785 A1
- DE 2458935 A1
- DE 3045581 A1
- DE 10318104 A1